# EUROPÄISCHE PATENTSCHRIFT

(11) **EP 0 618 772 B1**
(45) Veröffentlichungstag und Bekanntmachung des Hinweises auf die Patenterteilung: **02.05.1997**
(21) Anmeldenummer: 93923527.1
(22) Anmeldetag: 22.10.1993
(51) Int. Cl.: A22C 17/04

(54) **VORRICHTUNG UND VERFAHREN ZUM ENTBEINEN**
DEBONING DEVICE AND METHOD
DISPOSITIF ET PROCEDE DE DESOSSEMENT

(30) Priorität: 23.10.1992 EP 92118133
(43) Veröffentlichungstag der Anmeldung: 12.10.1994
(73) Patentinhaber: SCHAAR TEC SPEZIALMASCHINEN GmbH & Co KG, D-48231 Warendorf (DE)
(72) Erfinder: SCHAARSCHMIDT, Martin, D-48231 Warendorf (DE)
(74) Vertreter: Weber, Joachim, Dr.
(86) Internationale Anmeldenummer: EP9302922
(87) Internationale Veröffentlichungsnummer: WO9409634

(56) Entgegenhaltungen:
- EP-A- 0 439 780
- DE-A- 2 047 772
- DE-U- 9 214 207
- GB-A- 2 124 883
- NL-A- 8 302 495
- US-A- 2 893 051
- US-A- 3 296 654
- US-A- 3 412 425
- US-A- 3 470 581
- US-A- 3 510 908
- US-A- 4 207 653
- US-A- 4 377 884

## Beschreibung

Die Erfindung bezieht sich auf eine Vorrichtung sowie ein Verfahren zum Entbeinen von Gliedmaßen von Geflügel oder ähnlich gebauten Tieren, insbesondere zum Entbeinen von Flügeln und Keulen.

Aus dem Stand der Technik sind unterschiedlichste Vorrichtungen und Verfahren bekannt, um den Entbeinvorgang zu automatisieren. Bei einer manuellen Entbeinung, d.h. bei einem manuellen Ablösen von Fleisch ist ein relativ hoher Arbeitsaufwand erforderlich. Weiterhin ist eine vollständige Entbeinung meist nicht möglich, so daß ein relativ hoher Prozentsatz an verwendbarer Fleischmasse an den Knochen verbleibt. Demgemäß liegt ein sehr niedriger Wirkungsgrad vor. Bei automatisch arbeitenden Verfahren und Vorrichtungen ist es erforderlich, die Vorgehensweise so zu wählen, daß mit einem möglichst geringen manuellen Aufwand eine schnelle, zuverlässige und sorgfältige Entbeinung stattfinden kann. Insbesondere bei kleinen Gliedmaßen, wie Geflügelkeulen oder Geflügel-Flügeln stellt dies einen hohen Aufwand dar.

Die aus dem Stand der Technik bekannten Vorrichtungen, welche für derartige Einsatzzwecke konzipiert sind, basieren zumeist auf einem technischen Grundprinzip, bei welchem bei dem Entbeinvorgang der Knochen aus dem Fleisch herausgezogen wird. So beschreibt beispielsweise die EP-A1-439 780 eine Vorrichtung, bei welcher die Gliedmaße an einem Ende gehalten wird, während das an dem anderen endseitigen Knochen anhaftende Fleisch abgestreift wird. Diese Vorgehensweise ist sehr fehlerbehaftet, da die gesamte Abstreifkraft von dem Mittelgelenk aufgefangen werden muß. Wenn dieses beschädigt ist oder wenn einer der beiden anderen Knochen gebrochen sind, ist es nicht möglich, den Entbeinvorgang durchzuführen. Ein ähnliches Herausziehen ist auch aus der FR-A2-566 629 vorbekannt, hierbei findet nur eine teilweise Entbeinung statt, da der herausragende Knochen beim Verzehr zum Halten dienen soll.

Ein Ausdrücken eines Knochens in seiner Längsrichtung ist zum Beispiel aus der US-A-4 377 884 bekannt.

Aus der EP-A1-402 647 ist es bekannt, bei Extremitäten von Geflügel oder dergleichen das Mittelgelenk in gestrecktem Zustand der Extremität auszustanzen und die Knochen seitlich herauszuziehen. Auch hierbei entsteht das Problem, daß bei einem gebrochenen Knochen ein vollständiges Herausziehen nicht sichergestellt ist, so daß stets Nachkontrollen erforderlich sind. Weiterhin werden die Knochen an den äußeren Gelenkköpfen gegriffen, so daß durch den Abstreif- bzw. Ausziehvorgang Sehnenteile oder Teile des Muskelgewebes mit abgezogen werden können.

Abgesehen von der Funktionssicherheit des Verfahrens ist es bei derartigen Entbein-Vorgängen wichtig, daß nur eine sehr geringe Zeitdauer für den Entbeinvorgang aufgewendet werden muß. Nur so sind die Vorrichtungen wirtschaftlich einsetzbar.

Ein weiteres Problem stellt sich hinsichtlich der Stabilität des Knochengerüstes der zu entbeinenden Gliedmaßen. Insbesondere bei Mastgeflügel weisen die Knochen keine ausreichende Festigkeit auf. Hierdurch scheiden Vorgehensweisen aus, welche beim Entbeinen von anderen Tieren, wie etwa Schweinen oder Rindern bekannt sind. So ist es beispielsweise nicht möglich, die Knochen in Längsrichtung zu trennen, um den Entbeinvorgang durchzuführen.

Der Erfindung liegt die Aufgabe zugrunde, ein Verfahren und eine Vorrichtung zu schaffen, welche bei einfachem Aufbau und einfacher, betriebssicherer Anwendbarkeit ein zuverlässiges Entbeinen von Gliedmaßen ermöglichen. Hierbei sollen die erfindungsgemäße Vorrichtung und das erfindungsgemäße Verfahren sowohl bei Flügeln oder Keulen von Geflügel als auch bei vergleichbaren Gliedmaßen ähnlicher Tiere, wie beispielsweise Kaninchen, Schafe etc. anwendbar sein.

Erfindungsgemäß wird die Aufgabe hinsichtlich der Vorrichtung durch eine Vorrichtung mit folgenden Merkmalen gelöst:
- Mit einer Haltevorrichtung zum Einspannen der Gliedmaßen bei abgewinkeltem Mittelgelenk mit im wesentlichen paralleler Ausrichtung der Knochen,
- mit einer ersten Schneideeinrichtung zum Abtrennen eines Mittelgelenks der Gliedmaße,
- mit einer zweiten Schneideeinrichtung zum Abtrennen von Endgelenken und/oder Endbereichen der Gliedmaße, und
- mit einer Ausdrückvorrichtung zum Ausdrücken der Knochen in deren Längsrichtung.

Die erfindungsgemäße Vorrichtung zeichnet sich durch eine Reihe erheblicher Vorteile aus. Das erfindungsgemäß zugrundeliegende Prinzip beruht darin, die Knochen aus dem Fleisch der Gliedmaßen herauszudrücken. Da Knochen eine sehr hohe Druckfestigkeit aufweisen, können ausreichende Kräfte aufgebracht werden, um die Knochen aus dem Fleisch herauszuschieben. Weiterhin besteht bei angebrochenen oder beschädigten Knochen keinerlei Problem, da selbst ein in zwei Teile zerbrochener Knochen betriebssicher ausgeschoben werden kann. Eventuell vorhandene Knochensplitter werden durch den vorhandenen Kanal ebenfalls entfernt. Da durch die erfindungsgemäße Vorrichtung sowohl das Mittelgelenk als auch die Endgelenke und/oder Endbereiche der Gliedmaßen vor dem Ausdrücken entfernt werden, verbleibt lediglich ein im wesentlichen gerades Knochenstück, welches problemlos entfernt werden kann. Durch das Abtrennen der Gelenke und/oder Endbereiche werden die jeweiligen Sehnen in betriebssicherer Weise entfernt. Auch dies ist sehr vorteilhaft, da keine Betriebsstörungen zu befürchten sind und da während des Entbeinvorganges kein zusätzliches Fleisch zusammen mit dem Knochen entfernt wird.

Ein weiterer Vorteil der erfindungsgemäßen Lösung besteht darin, daß insbesondere auch die Speiche eines Flügels, beispielsweise eines Hähnchens, in zuverlässiger Weise entfernt werden kann. Gerade bei diesen sehr kleinen, nadelartigen Knochen ist es von besonderer Wichtigkeit, eine betriebssicher wirkende Vorrichtung bzw. ein entsprechendes Verfahren anzuwenden.

Weiterhin ist es besonders vorteilhaft, daß die Erfindung ohne Änderungen für rechte und linke Gliedmaßen, d.h. rechte oder linke Flügel oder Keulen etc. anwendbar ist. Konstruktive oder verfahrenstechnische Änderungen sind nicht erforderlich. Auch hierdurch ergibt sich ein ganz wesentlicher Vorteil gegenüber dem Stand der Technik, da die vorbekannten Vorrichtungen stets entweder für rechte oder für linke Gliedmaßen gebaut werden müssen.

In einer besonders vorteilhaften Weiterbildung der Erfindung ist vorgesehen, daß die Haltevorrichtung eine Abstreifmatrizeneinrichtung zum Durchdrücken des Mittelgelenkes und zum Abstreifen des im Bereich des Mittelgelenkes befindlichen Fleisches und/oder der diesbezüglichen Haut umfaßt. Insbesondere bei Hähnchenkeulen ist das Mittelgelenk (Kniegelenk) von einer relativ dicken Fleisch- bzw. Hautschicht überdeckt. Durch das Abstreifen dieser Fleisch- bzw. Hautschicht kann der Wirkungsgrad erheblich erhöht werden, da bei einem nachfolgenden Abschneiden oder Abtrennen des Mittelgelenkes dieses Fleisch an der Gliedmaße zurückbleibt.

Um die Gliedmaßen in einem Arbeitsgang einstückig bearbeiten zu können, kann es weiterhin sehr vorteilhaft sein, wenn die Haltevorrichtung so ausgebildet ist, daß die Knochen im wesentlichen parallel eingespannt werden. Das bedeutet, daß beispielsweise ein Flügel oder eine Hähnchenkeule hinsichtlich des Kniegelenks bzw. des Ellenbogengelenks entsprechend gebeugt wird, um die Knochen parallel zueinander ausrichten zu können. Durch diese Ausrichtung der Knochen ist es möglich, eine vollständige Entbeinung innerhalb weniger Arbeitsgänge durchzuführen. Alternativ hierzu können jedoch auch beispielsweise der Oberflügel und der Unterflügel in separaten Arbeitsgängen restlich entbeint werden, nach dem das Mittelgelenk abgetrennt wurde.

Das Abtrennen der Gelenke bzw. der Gelenkköpfe erfolgt bevorzugterweise mit einer Säge.

Erfindungsgemäß umfaßt die Ausdrückvorrichtung in einer vorteilhaften Weiterbildung der Erfindung eine erste und eine zweite Druckplatte. Diese können unter Zwischenlegung des Fleisches der Gliedmaße gegeneinander bewegt werden. Somit wird das Fleisch gedrückt und komprimiert, so daß es zum einen eine höhere Festigkeit aufweist und zum anderen die in dem Fleisch befindlichen Knochen bereits etwas herausgedrückt werden. Hierdurch erleichtert sich das nachfolgende vollständige Ausdrücken der Knochen. Die erste Druckplatte ist mit Ausnehmungen zur Durchschiebung der Knochen versehen, diese Ausnehmungen können in Form zylindrischer Bohrungen ausgebildet sein, es ist jedoch auch möglich, das Einfädeln der Knochen dadurch zu erleichtern, daß die Ausnehmungen trichterartig ausgestaltet sind.

Die zweite Druckplatte ist mit Ausdrückmitteln versehen, bevorzugterweise in Form von Stößeln. Diese sind in Ausnehmungen der zweiten Druckplatte geführt und so ausgerichtet, daß sie im wesentlichen der Lage der auszudrückenden Knochen zugeordnet sind.

In einer alternativen Ausgestaltung der Erfindung ist vorgesehen, daß zumindest eine der Druckplatten als Klemmzange ausgebildet ist, welche ebenfalls Ausnehmungen aufweist, um die Knochen zu umgreifen. Hierdurch kann wahlweise eine noch präzisere Halterung und Ausrichtung der Gliedmaße zu Beginn des Bearbeitungsvorganges erfolgen.

Bezüglich des erfindungsgemäßen Verfahrens sind folgende Arbeitsschritte vorgesehen:
- Halten der zu entbeinenden Gliedmaße wobei das Mittelgelenk abgewinkelt ist mit im wesentlichen paralleler Ausrichtung der Knochen,
- Abtrennen des Mittelgelenkbereichs inkl. der daran angewachsenen Sehnen,
- Abtrennen des Endgelenkbereichs und/oder des Endbereichs der Gliedmaßen inkl. der daran angewachsenen Sehnen,
- Einspannen der Gliedmaße zwischen einer ersten und einer zweiten Druckplatte,
- Pressen des Fleisches der Gliedmaße zwischen den Druckplatten und teilweises Ausschieben des zumindest einen Knochens durch die Druckplatte,
- Ausdrücken des zumindest einen Knochens in seiner Längsrichtung mittels eines Stößels.

Das erfindungsgemäße Verfahren zeichnet sich somit auch dadurch aus, daß die einzelnen Verfahrensschritte vollständig automatisch durchgeführt werden können. Manuelle Nacharbeiten sind nicht erforderlich. Weiterhin ist ein hohes Maß an Betriebssicherheit gewährleistet. Während es manuell möglich ist, zwei Hähnchenkeulen oder Hähnchenflügel pro Minute zu entbeinen, ermöglicht das erfindungsgemäße Verfahren eine Steigerung auf ca. 40 Stück/min. Zusätzlich erhöht sich die Fleischausbeute um 2 % oder mehr.

Bedingt durch die einfache Ausgestaltung der erfindungsgemäßen Vorrichtung bzw. des erfindungsgemäßen Verfahrens kann die Vorrichtung besonders einfach gereinigt und gewartet werden. Dies ist ein wesentlicher Vorteil der Erfindung.

Im folgenden wird die Erfindung anhand von Ausführungsbeispielen in Verbindung mit der Zeichnung beschrieben. Dabei zeigt:
- Fig. 1: eine schematische Darstellung einer zu entbeinenden Gliedmaße, beispielsweise eines Hähnchenflügels,
- Fig. 2: eine schematische des in Fig. 1 gezeigten Hähnchenflügels nach abgetrenntem Mittelgelenk,
- Fig. 3: eine schematische Darstellung des Oberstücks gemäß Fig. 2,
- Fig. 4: eine schematische Darstellung des in Fig. 3 gezeigten Oberstücks mit abgetrenntem Endgelenk,
- Fig. 5: eine schematische Darstellung des in Fig. 4 gezeigten Zwischenprodukts zwischen zwei Druckplatten,
- Fig. 6: eine Darstellung der in Fig. 5 gezeigten Anordnung nach dem Pressen des Fleisches,
- Fig. 7: eine Darstellung, ähnlich Fig. 6, nach dem Ausdrücken der Knochen,
- Fig. 8: eine schematische Darstellung des nach dem in Fig. 2 gezeigten Arbeitsschritts erhaltenen Unterflügels zwischen zwei Druckplatten,
- Fig. 9: eine Darstellung, analog Fig. 6 des vorgepreßten Fleisches,
- Fig. 10: eine Darstellung, ähnlich Fig. 9, nach Abtrennen des Endgelenks,
- Fig. 11: eine Darstellung des nach Fig. 10 folgenden Arbeitsschrittes unter Darstellung des Ausdrückstößels,
- Fig. 12: eine Darstellung der in Fig. 11 gezeigten Anordnung nach Ausdrücken des Knochens,
- Fig. 13: eine weitere Darstellung, analog Fig. 1, eines zu entbeinenden Hähnchenflügels,
- Fig. 14: eine schematische Darstellung einer zangenartigen Haltevorrichtung,
- Fig. 15: eine Gesamtdarstellung des in Fig. 13 gezeigten Rohlings nach Ansetzen der in Fig. 14 dargestellten Halteeinrichtung,
- Fig. 16: eine Darstellung des in Fig. 15 gezeigten Rohlings nach Abtrennen des Mittelgelenks und des Endgelenks bzw. des Endbereichs,
- Fig. 17: eine Darstellung des in Fig. 16 gezeigten Rohlings nach Pressen zwischen zwei Druckplatten und bei Annäherung der Ausschiebestößel,
- Fig. 18: eine Darstellung, ähnlich Fig. 17, nach erfolgtem Ausschieben der Knochen,
- Fig. 19: eine weitere schematische Darstellung einer Halterungs- und Schneidevorrichtung zum Abtrennen des Mittelgelenkbereichs und der Endbereiche der Gliedmaße,
- Fig. 20: eine schematische Darstellung einer zu entbeinenden Gliedmaße, nämlich einer Keule, beispielsweise eines Hähnchens,
- Fig. 21: eine schematische Darstellung der in Fig. 20 gezeigten Keule sowie einer ersten und einer zweiten Druckplatte,
- Fig. 22: eine Darstellung des auf den Arbeitsschritt der Fig. 21 folgenden Arbeitsschrittes nach Durchdrücken der ersten Druckplatte,
- Fig. 23: eine Darstellung des nächst folgenden Arbeitsschrittes nach Abtrennen der Endgelenke,
- Fig. 24: einen weiteren Arbeitsschritt zur Vorbereitung der Abtrennung des Mittelgelenks,
- Fig. 25: einen weiteren Arbeitsschritt nach Abstreifen des Fleisches und der Haut im Bereich des Mittelgelenks,
- Fig. 26: eine schematische Darstellung des Zustandes nach Abtrennung des Mittelgelenks,
- Fig. 27: einen nachfolgenden Arbeitsschritt mit Annäherung von Stößeln, und
- Fig. 28: einen End-Arbeitsschritt nach Ausdrücken der Knochen.

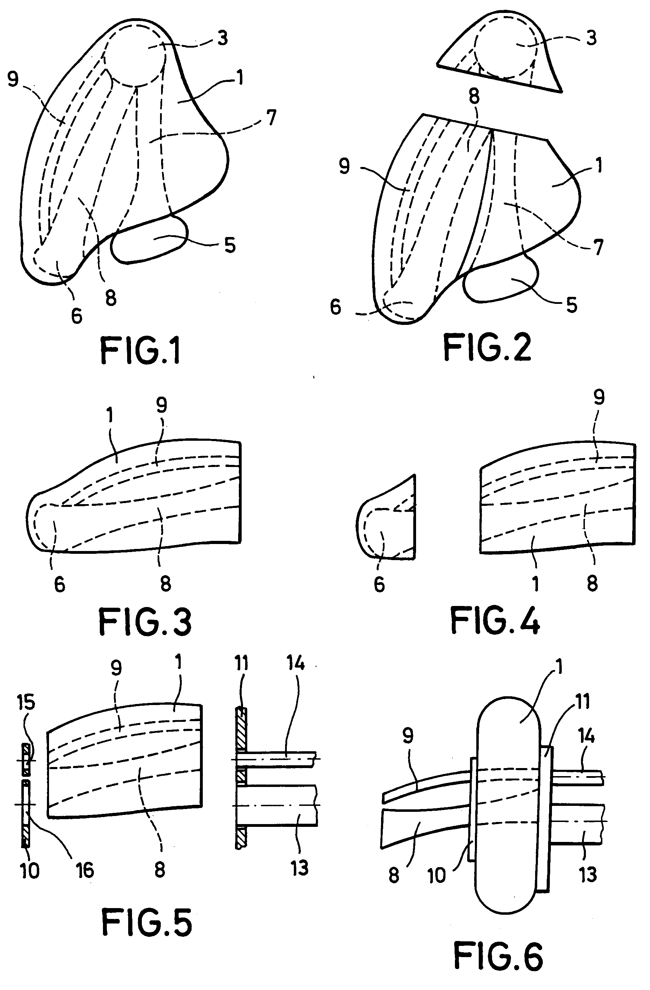

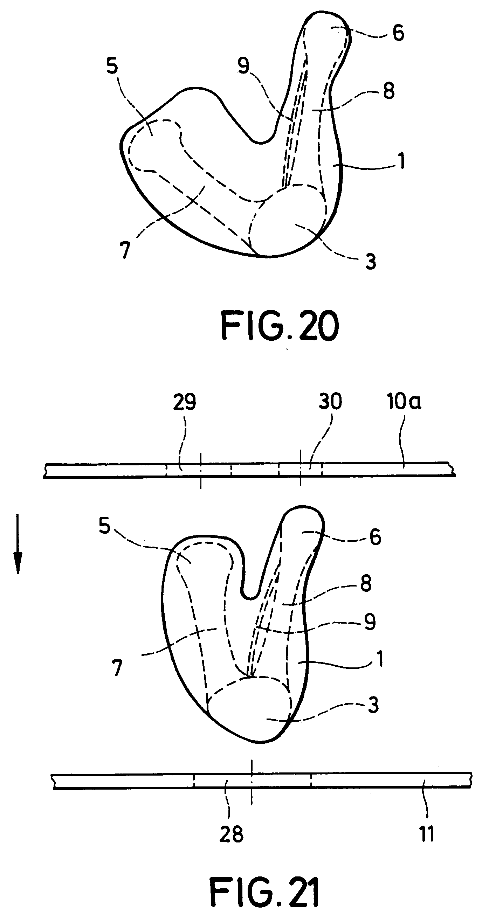

Es wird eine Verfahrensvariante in Zusammenhang mit den Fig. 1 bis 12 beschrieben, bei welcher eine Gliedmaße 1 (Hähnchenflügel) entbeint wird. Hierbei wird zunächst ein Mittelgelenk 3 (Ellenbogengelenk) entfernt, so wie dies in Fig. 3 dargestellt ist. Hierfür kann beispielsweise eine Vorrichtung ähnlich der in Fig. 19 gezeigten Anordnung verwendet werden. Weiterhin kann die Gliedmaße 1 in einer Halterungseinrichtung gehalten werden, welche endlose Transportketten 18 umfaßt, an welchen Halterungen 19 befestigt sind. Zwischen diesen kann die Gliedmaße 1 eingelegt werden. Eine erste Schneideeinrichtung 2, beispielsweise in Form einer Kreissäge, kann dann längs einer Schnittlinie 20 das Mittelgelenk 3 entfernen. Dieser Zustand ist in Fig. 2 gezeigt.

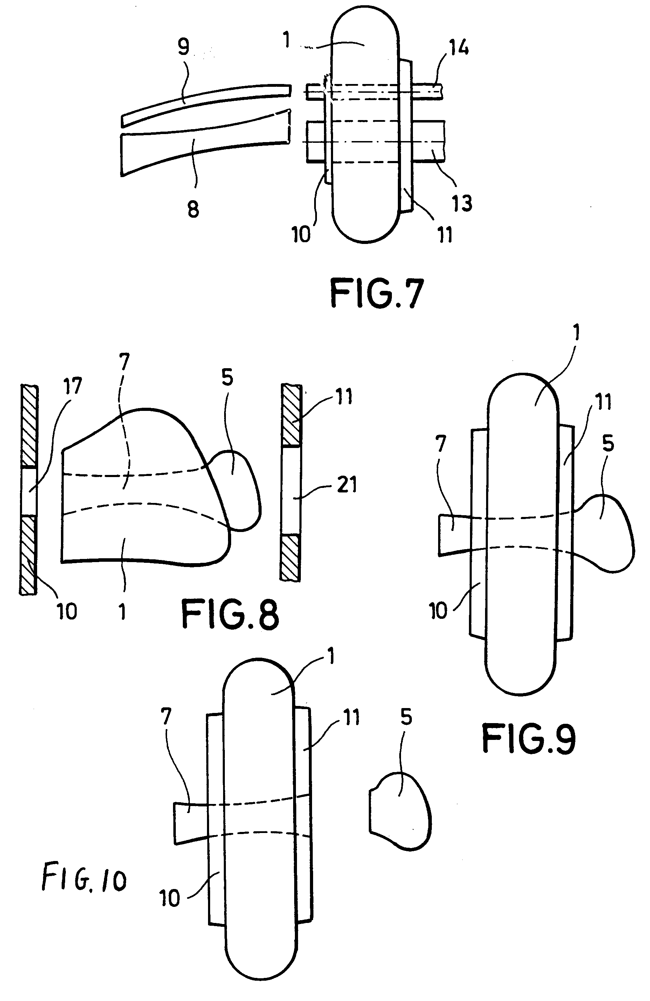

Da die Gliedmaße, wie ebenfalls in Fig. 2 gezeigt, in die Halterung 19 in einem Zustand eingelegt ist, in welchem die einzelnen Knochen jeweils parallel zueinander ausgerichtet sind, ergeben sich nach dem Abtrennen des Mittelgelenks 3 zwei einzelne Stücke, nämlich ein in Fig. 3 gezeigtes Oberstück und ein in Fig. 8 gezeigter Unterflügel.

Die in den Fig. 1 und 2 gezeigte Gliedmaße stellt den Flügel eines Geflügels dar und umfaßt einen Oberflügelknochen 7. Sollte es sich um eine Hähnchenkeule handeln, so wäre die Bezugsziffer 7 einem Oberschenkelknochen zugeordnet. Es handelt sich somit um Femur und Humerus. Weiterhin umfaßt der Hähnchenflügel eine Elle 8 (Ulna) sowie eine Speiche 9 (Radius). Bei einer Hähnchenkeule wäre ein Schienbein 8 (Tibia) sowie ein Wadenbein 9 (Fibula) vorgesehen.

Das Flügeloberstück gemäß Fig. 3 wird nunmehr mittels einer zweiten Schneideeinrichtung weiterbearbeitet, um einen Endbereich 6 abzutrennen. Das so erhaltene Ausgangsprodukt wird zwischen einer ersten Druckplatte 10 und einer zweiten Druckplatte 11 angeordnet. Die erste Druckplatte 10 ist mit Ausnehmungen 15 und 16 versehen, welche in ihrer Größe im wesentlichen der Speiche 9 bzw. der Elle 8 entsprechen. Ebenso ist die Ausrichtung der Ausnehmungen 15 und 16. Die Druckplatte 11 weist ebenfalls Ausnehmungen auf, in welchen ein zweiter Stößel 13 und ein dritter Stößel 14 verschiebbar gelagert sind.

Die Fig. 6 zeigt einen weiteren Verfahrensschritt, bei welchem die erste und die zweite Druckplatte 10, 11 gegeneinander gepreßt wurden. Da die Stößel 13 und 14 die Ausnehmungen der zweiten Druckplatte 11 verschließen, ergibt sich eine ebene Andruckfläche, während die Ausnehmungen 15 und 16 der ersten Druckplatte 10 das teilweise Durchdrücken der Elle 8 und der Speiche 9 ermöglichen.

Nachfolgend werden die Stößel 13 und 14 vorgeschoben, wodurch, wie in Fig. 7 gezeigt, die Knochen 8, 9 vollständig aus dem nunmehr verbleibenden Fleischstück ausgedrückt werden.

Durch das in Fig. 6 gezeigte Vordrücken erfolgt ein Fixieren und teilweises Ausdrücken der Knochen. Dies hat zum einen zur Folge, daß die Knochen durch die erste Druckplatte 10 in sicherer Weise geführt und gehalten werden und daß zum anderen die Stößel 13 und 14 korrekt positioniert werden.

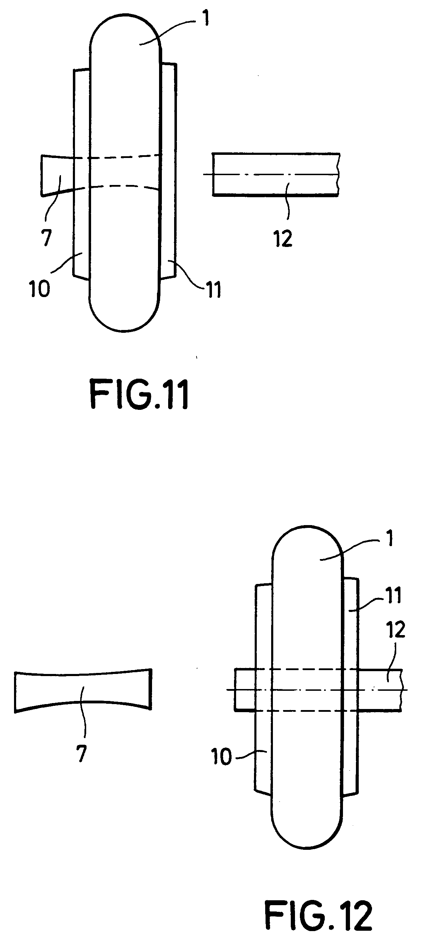

Die Fig. 8 zeigt den nach dem Arbeitsschritt gemäß Fig. 2 erhaltenen Unterflügel, welcher ebenfalls zwischen einer ersten und einer zweiten Druckplatte 10, 11 positioniert ist. Der Oberflügelknochen bzw. das Oberarmbein 7 weist noch ein Endgelenk 5 auf. Wie in Fig. 8 gezeigt, ist eine Ausnehmung 17 der ersten Druckplatte 10 so dimensioniert, daß der Oberflügelknochen 7 durchschiebbar ist, nicht jedoch das Endgelenk 5. Weiterhin weist die zweite Druckplatte 11 eine Ausnehmung 21 auf, welche in ihrer Größe dem Durchmesser des Endgelenks 5 entspricht. Bei dem in Fig. 9 gezeigten Vordrückvorgang wird der Endgelenkkopf durch die Ausnehmung 21 geführt, so daß hierdurch ein Abstreifen und Zurückdrücken des Fleisches erfolgt, während ein Teil des Knochens 7 durch die Ausnehmung der ersten Druckplatte 10 gedrückt wird. Somit erfolgt ein Einspannen und Vordrücken. Nachfolgend wird, wie in Fig. 10 dargestellt, der Endgelenkkopf 5 abgetrennt, beispielsweise mittels der zweiten Schneideeinrichtung 4. Die Fig. 11 zeigt den ersten Stößel 12, welcher gegen den Knochen 7 gelegt wird. Nach Durchführung des Stößels 12 durch die Druckplatten 10, 11 wird der Knochen 7, wie in Fig. 12 gezeigt, vollständig ausgedrückt.

In einem weiteren, nicht dargestellten Verfahrensschritt werden die Druckplatten 10, 11 voneinander gelöst, so daß das vollständig entbeinte Fleisch entnommen werden kann.

Die im Zusammenhang mit den Fig. 1 bis 12 beschriebenen Verfahrensschritte bzw. Vorrichtungsteile beschreiben die separate Verarbeitung des Oberflügels und des Unterflügels. Es versteht sich, daß die jeweiligen Arbeitsschritte synchron zueinander durchgeführt werden können. Somit können auch die in den Fig. 1 bis 12 beschriebenen Vorrichtungsteile parallel zueinander angeordnet sein bzw. parallel zueinander wirken.

Die erfindungsgemäße Vorrichtung bzw. das erfindungsgemäße Verfahren sind in gleicher Weise für Hähnchenflügel, Hähnchenkeulen, Flügel und Keulen sonstiger Geflügel und anderer Tiere, beispielsweise Kaninchen, Hasen etc. anwendbar.

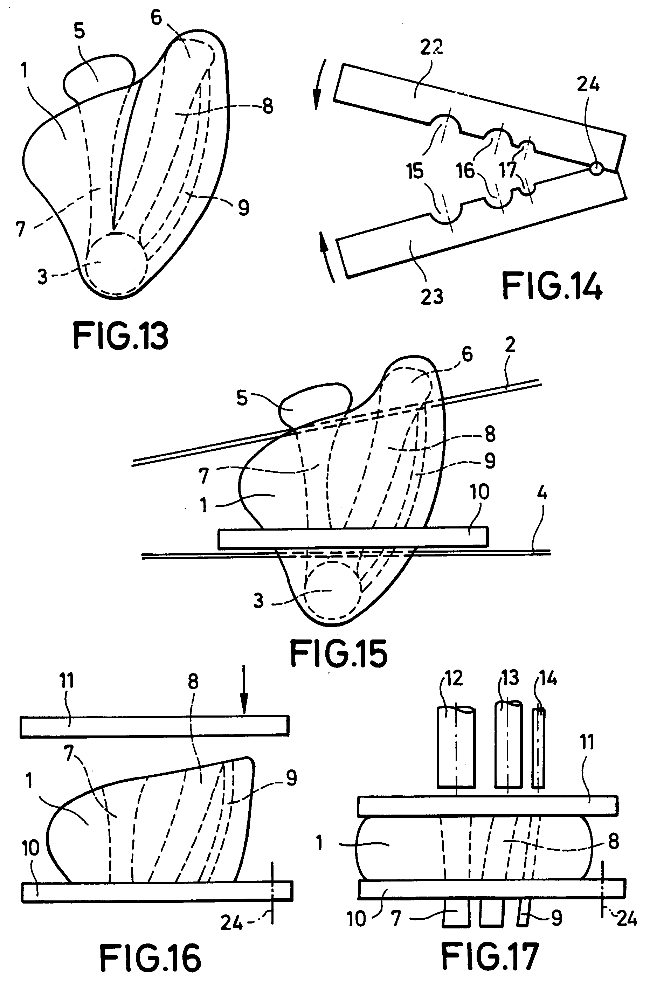

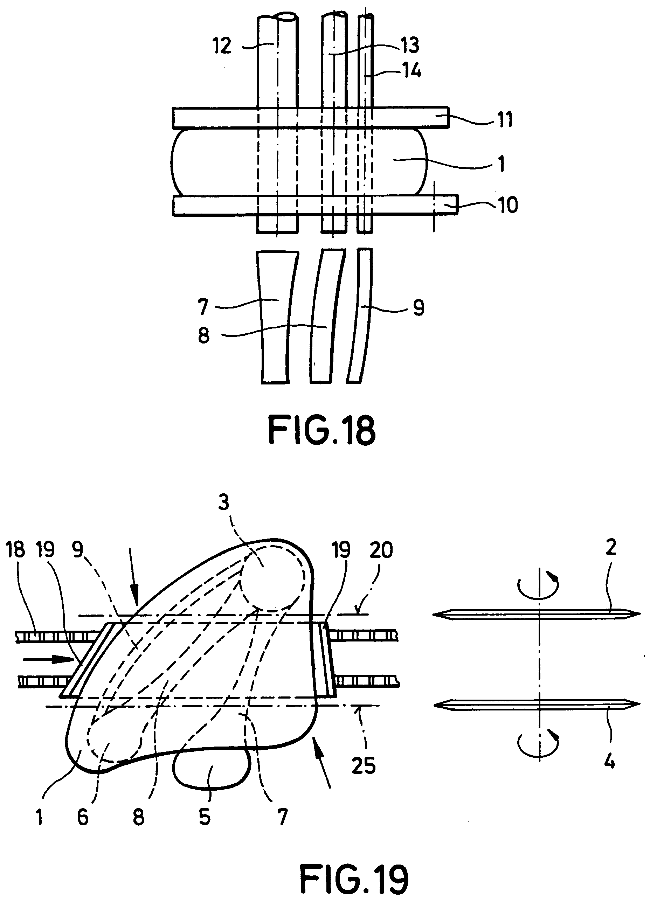

Die Fig. 13 bis 18 beschreiben eine weitere Verfahrensvariante, bei welcher eine klemmzangenartige Haltevorrichtung verwendet wird, welche im einzelnen in Fig. 14 dargestellt ist. Die Haltevorrichtung umfaßt ein oberes Teil 22 und ein unteres Teil 23, welche mittels eines Scharniers 24 miteinander verbunden sind. Es sind jeweils halbrunde Ausnehmungen 15 bis 17 vorgesehen, um die Knochen 7 bis 9 zu umfassen, wie in Fig. 15 dargestellt. Die Halterung wird benachbart zu dem Mittelgelenk 3 angesetzt, wobei vorher ein Abstreifen des im Bereich des Mittelgelenks 3 befindlichen Fleisches bzw. der diesbezüglichen Haut erfolgen kann. Die Fig. 15 zeigt weiterhin die Schnittbahnen der ersten Schneideeinrichtung 2 und der zweiten Schneideeinrichtung 4. Es werden somit sowohl das Mittelgelenk 3 als auch das Endgelenk 5 und der Endbereich 6 entfernt, so daß sich das in Fig. 16 gezeigte Zwischenprodukt ergibt. Die Haltevorrichtung mit den Zeilen 22 und 23 dient dabei als erste Druckplatte 10. Gegen diese wird eine zweite Druckplatte 11 angelegt und, wie in Fig. 17 gezeigt, vorgepreßt. Hierdurch erfolgt ein Fixieren der Knochen, so daß nachfolgend die Stößel 12 bis 14 angenähert und, wie in Fig. 18 gezeigt, vollständig durch die Druckplatten 10, 11 und das Fleisch gedrückt werden können. Hierdurch werden die Knochen 7 bis 9 vollständig entfernt.

Das in den Fig. 13 bis 18 beschriebene Verfahren (nebst zugehöriger Vorrichtung) unterscheidet sich von der Darstellung der Fig. 1 bis 12 darin, daß beide Teile des Flügels gleichzeitig gehaltert und bearbeitet werden.

Die Fig. 19 zeigt in der Draufsicht eine vereinfachte Darstellung einer weiteren Ausgestaltung der erfindungsgemäßen Vorrichtung, parallel zu der ersten Schneideeinrichtung 2 ist die zweite Schneideeinrichtung 4 angeordnet. Letztere ist auf einer Schnittlinie 25 bewegbar, um das Endgelenk 5 und den Endbereich 6 abzutrennen. Die Fig. 19 zeigt nicht die mögliche Rückdrückung oder Abstreifung von Fleisch- bzw. Hautteilen.

Die Fig. 20 bis 28 zeigen eine weitere Ausgestaltung der Erfindung anhand der Entbeinung einer Keule, beispielsweise eines Hähnchens. Gleiche Teile wurden mit gleichen Bezugsziffern wie bei den vorhergehenden Ausführungsbeispielen versehen.

Die Fig. 20 zeigt in schematischer Weise die Keule eines Hähnchens, diese umfaßt ein Mittelgelenk 3, einen Oberschenkelknochen (Femur) 7 mit einem Endgelenk 5, ein Schienbein (Tibia) 8 sowie ein Wadenbein (Fibula) 9 mit einem Endbereich 6. Die Fig. 20 zeigt die Ausgangssituation der Keule im ausgelösten Zustand.

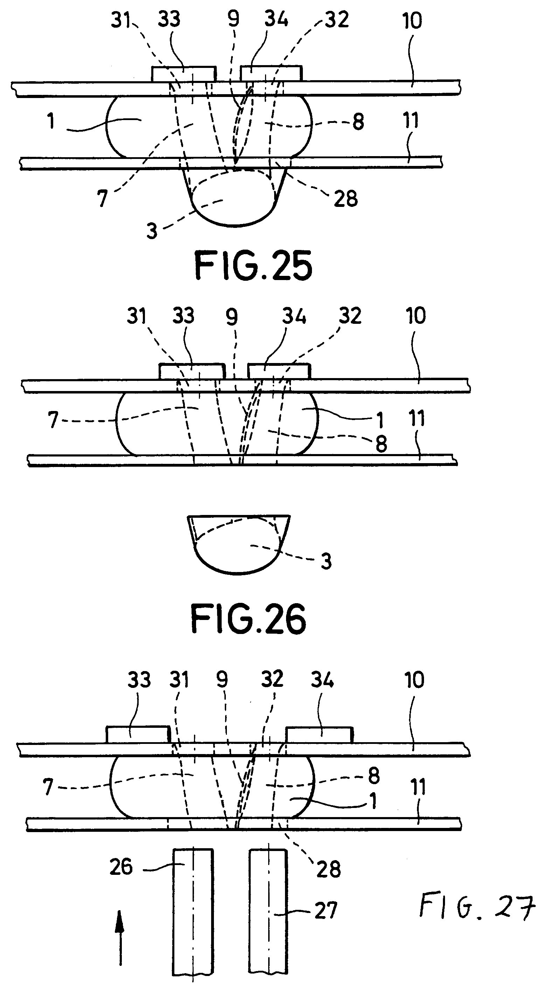

Zum Entbeinen werden zunächst die Knochen im wesentlichen parallel zueinander ausgerichtet (Fig. 21). Es werden nunmehr zwei Druckplatten, nämlich eine erste, in Fig. 21 oben gezeigte Druckplatte 10a sowie eine zweite Druckplatte 11 angenähert und, wie durch den Pfeil dargestellt, gegeneinander bewegt. Die zweite Druckplatte 11 ist mit einer Ausnehmung 28 versehen, deren Größe so bemessen ist, daß, wie nachfolgend in Zusammenhang mit Fig. 25 beschrieben werden wird, das Mittelgelenk 3 durch die Ausnehmung 28 durchgeführt werden kann, während das sich im Bereich des Mittelgelenks 3 befindliche Fleisch bzw. die entsprechende Haut abgestreift werden, so daß das Gelenk 3 im wesentlichen frei liegt.

Die erste Druckplatte 10a ist mit zwei Ausnehmungen 29 und 30 versehen, deren Größe so bemessen ist, daß das Endgelenk 5 bzw. der Endgelenkbereich 6 durch die Ausnehmungen durchschiebbar sind, wobei auch hier ein Abstreifen von Fleisch bzw. Haut erfolgen kann.

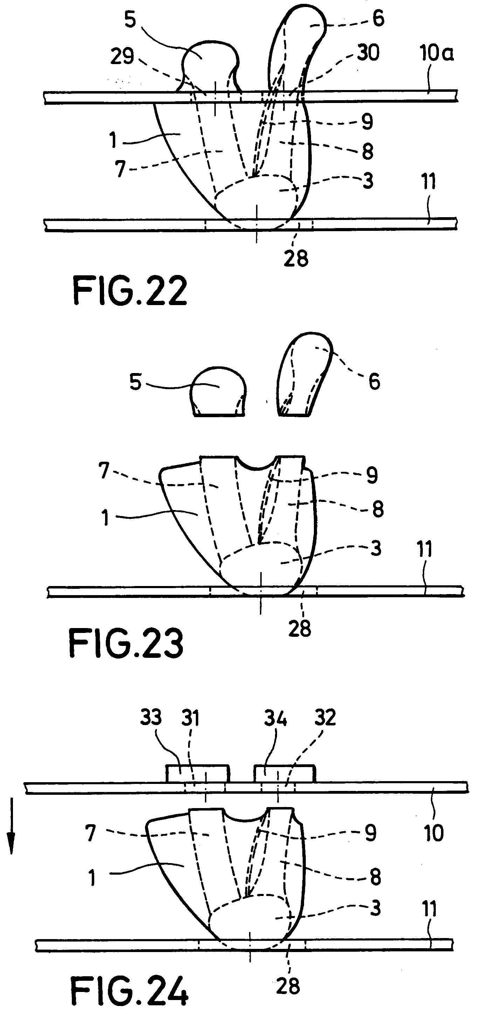

Die Fig. 22 zeigt den nächst folgenden Arbeitsschritt, in welchem die beiden Platten 10a und 11 aneinander angenähert wurden, wobei das Endgelenk 5 und der Endbereich 6 durch die Ausnehmungen 29 und 30 durchgeschoben sind. Es kann nunmehr, parallel zu der Druckplatte 10a ein Abtrennen des Endgelenks 5 und des Endbereichs 6 erfolgen. Nach Entfernen der Druckplatte 10a ergibt sich der in Fig. 23 schematisch gezeigte Zustand.

In einem nächsten, in Fig. 24 dargestellten Arbeitsschritt wird eine weitere, erste Druckplatte 10 angenähert, welche mit Ausnehmungen 31 und 32 versehen ist. Die Ausnehmung 31 ist so bemessen, daß der Oberschenkelknochen 7 durch diese durchführbar ist, während die Ausnehmung 32 so ausgebildet ist, daß das Schienbein und das Wadenbein gemeinsam durch die Ausnehmung 32 durchschiebbar sind. Die Ausnehmungen 31 und 32 werden durch Verschlußelemente 33 und 34 verschlossen.

Bei Annäherung der Druckplatten 10 und 11 (sh. Pfeil in Fig. 24) werden die Knochen 7, 8 und 9 jeweils in die Ausnehmungen 31 bzw. 32 eingedrückt und liegen gegen die Verschlußelemente 33 und 34 an (siehe Fig. 25). Bei einer weiteren Bewegung der beiden Druckplatten 10 und 11 gegeneinander wird das Mittelgelenk 3 durch die Ausnehmung 28 gepreßt. Die Druckplatte 11 mit der Ausnehmung 28 dient dabei als Matrize, wobei, wie bereits erwähnt, die Haut bzw. das Fleisch im Bereich des Mittelgelenks 3 abgestreift werden und zwischen den beiden Platten 10 und 11 verbleiben. Nachfolgend kann das Mittelgelenk 3 mittels einer Säge bzw. eines Messers abgetrennt werden, so daß sich der in Fig. 26 gezeigte Zustand ergibt.

In einem weiteren Arbeitsschritt werden nunmehr Stößel 26 und 27 in Richtung auf die zweite Druckplatte 11 bewegt, während gleichzeitig die Verschlußelemente 33 und 34 die Ausnehmungen 31 und 32 freigeben. Dieser Zustand ist in Fig. 27 dargestellt.

In einem nachfolgenden Arbeitsschritt werden die Stößel 26 und 27 durch die Ausnehmung 28 geschoben, wobei die Größe und Anordnung der Stößel 26 und 27 so ausgewählt ist, daß die Knochen 7, 8 und 9 durch die Ausnehmungen 31 bzw. 32 ausgestoßen werden.

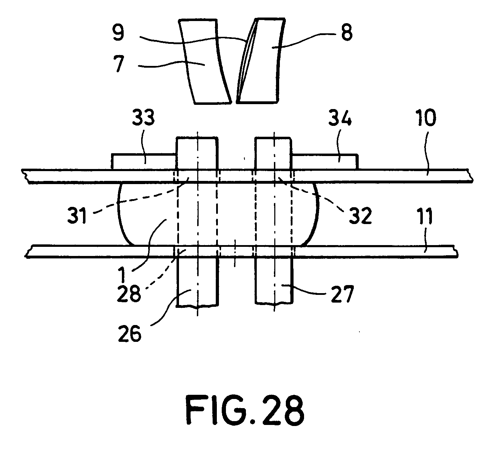

Wie in Fig. 28 gezeigt, verbleibt somit ein vollständig entbeintes Fleischstück zwischen den beiden Druckplatten 10 und 11. Nach Zurückziehen der Stößel 26 und 27 und Auseinanderfahren der Druckplatten 10 und 11 kann das Fleischstück entnommen werden.

Aus den obigen Beschreibungen ergibt sich, daß das Ausschieben bzw. Ausstoßen der Knochen jeweils so erfolgt, daß ein vollständiges Entbeinen sichergestellt ist. Nacharbeiten sind nicht erforderlich.

Die Ausführungsbeispiele zeigen, daß die Erfindung universell einsetzbar ist, um Gliedmaßen zu entbeinen. Es können dabei Keulen und Flügel von Geflügel ebenso entbeint werden, wie Gliedmaßen von anderen Tieren, beispielsweise Kaninchen, Schafe, etc.

Die Erfindung ist nicht auf die gezeigten Ausführungsbeispiele beschränkt, vielmehr ergeben sich im Rahmen der Ansprüche vielfältige Abwandlungs- und Modifikationsmöglichkeiten.

Zusammenfassend ist folgendes festzustellen:

Die Erfindung bezieht sich auf eine Vorrichtung sowie ein Verfahren, welche mit folgenden Arbeitsschritten arbeiten:
- Halten der zu entbeinenden Gliedmaße (1) wobei das Mittelgelenk (3) abgewinkelt ist unter im wesentlichen paralleler Ausrichtung der Knochen (7, 8, 9),
- Abtrennen des Mittelgelenks (3) inkl. der daran angewachsenen Sehnen,
- Abtrennen des Endgelenkbereichs (5) und/oder des Endbereichs (6) der Gliedmaßen (1) inkl. der daran angewachsenen Sehnen,
- Einspannen der Gliedmaße (1) zwischen einer ersten (10) und einer zweiten (11) Druckplatte,
- Pressen des Fleisches der Gliedmaße (1) zwischen den Druckplatten (10, 11) und teilweises Ausschieben des zumindest einen Knochens (7, 8, 9) durch die Druckplatte, und
- Ausdrücken des zumindest einen Knochens (7, 8, 9) mittels eines Stößels (12, 13, 14). (Fig. 17).

## Patentansprüche

1. Vorrichtung zum Entbeinen von Gliedmaßen (1) von Geflügel oder ähnlich gebauten Tieren, insbesondere zum Entbeinen von Flügeln und Keulen, mit
- einer Haltevorrichtung zum Einspannen der Gliedmaßen (1) bei abgewinkeltem Mittelgelenk (3) mit im wesentlichen paralleler Ausrichtung der Knochen (7, 8, 9),
- einer ersten Schneideeinrichtung (2) zum Abtrennen eines Mittelgelenks (3) der Gliedmaßen (1),
- einer zweiten Schneideeinrichtung (4) zum Abtrennen von Endgelenken (5) und/oder Endbereichen (6) der Gliedmaßen, und
- einer Ausdrückvorrichtung zum Ausdrücken der Knochen (7, 8, 9) im deren Längsrichtung.

2. Vorrichtung nach Anspruch 1, dadurch gekennzeichnet, daß die Haltevorrichtung eine Abstreifmatrizeneinrichtung zum Durchdrücken des Mittelgelenks (3) und zum Abstreifen des im Bereich des Mittelgelenks (3) befindlichen Fleisches und/oder der Haut umfaßt.

3. Vorrichtung nach einem der Ansprüche 1 bis 2, dadurch gekennzeichnet, daß die erste (2) und/oder zweite (4) Schneideeinrichtung eine Säge umfaßt.

4. Vorrichtung nach einem der Ansprüche 1 bis 3, dadurch gekennzeichnet, daß die Ausdrückvorrichtung eine erste (10) und eine zweite (11), zueinander im wesentlichen parallele Druckplatte umfaßt, welche unter Zwischenlegung der Gliedmaßen (1) gegeneinander bewegbar sind, daß die erste Druckplatte (10) mit zumindest einer Ausnehmung (15, 16, 17) zur Durchschiebung der Knochen (7, 8, 9) versehen ist und daß die zweite Druckplatte (11) Ausdrückmittel (12, 13, 14) für die Knochen (7, 8, 9) aufweist.

5. Vorrichtung nach Anspruch 4, dadurch gekennzeichnet, daß die Ausdrückmittel (12, 13, 14) zumindest eine Ausnehmung umfassen, welche in ihrer Lage der Lage des Knochens (7, 8, 9) zugeordnet ist, sowie einen durch die Ausnehmung durchführbaren Stößel (12, 13, 14).

6. Vorrichtung nach Anspruch 4 oder 5, dadurch gekennzeichnet, daß zumindest eine der Druckplatten (10, 11) klemmzangenartig geteilt ausgebildet ist und mit Ausnehmungen (15, 16, 17) zum Umgreifen der Knochen (7, 8, 9) versehen ist.

7. Vorrichtung nach einem der Ansprüche 1 bis 6, dadurch gekennzeichnet, daß die erste (2) und die zweite (4) Schneideeinrichtung so ausgebildet sind, daß die Gelenke (3, 5) unter Trennung der Sehnen abgetrennt werden.

8. Verfahren zum Entbeinen von Gliedmaßen, unter Verwendung der Vorrichtung nach einem der Ansprüche 1 bis 7, mit folgenden Verfahrensschritten:
- Halten der zu entbeinenden Gliedmaße (1) wobei das Mittelgelenk (3) abgewinkelt ist mit im wesentlichen paralleler Ausrichtung der Knochen (7, 8, 9),
- Abtrennen des Mittelgelenks (3) einschließlich der daran angewachsenen Sehnen,
- Abtrennen des Endgelenkbereichs (5) und/oder des Endbereichs (6) der Gliedmaßen (1) einschließlich der daran angewachsenen Sehnen,
- Einspannen der Gliedmaßen (1) zwischen einer ersten (10) und einer zweiten (11) Druckplatte,
- Pressen des Fleisches der Gliedmaße (1) zwischen den Druckplatten (10, 11) und teilweises Ausschieben des zumindest einen Knochens (7, 8, 9) durch die Druckplatte, und
- Ausdrücken des zumindest einen Knochens (7, 8, 9) in seiner Längsrichtung mittels eines Stößels (12, 13, 14). (Fig. 17).

9. Verfahren nach Anspruch 8, dadurch gekennzeichnet, daß vor dem Abtrennen des Mittelgelenkbereichs (3) und/oder des Endgelenks (5) das dort befindliche Fleisch mit der zugehörigen Haut in Richtung auf die Gliedmaße (1) abgestreift wird.

10. Verfahren nach einem der Ansprüche 8 und 9, dadurch gekennzeichnet, daß nach dem Abtrennen des Mittelgelenkbereichs (3) die Gliedmaße (1) separat bezüglich der beiden sich ergebenden Einzelstücke entbeint wird.

## Claims

1. A device for boning limbs (1) of poultry or similarly built animals, in particular for boning wings and legs, having
- a retention device for clamping the limbs (1) when the centre joint (3) is bent with substantially parallel alignment of the bones (7, 8, 9),
- a first cutting device (2) for separating a centre joint (3) of the limbs (1),
- a second cutting device (4) for separating end joints (5) and/or end regions (6) of the limbs, and
- an ejection device for squeezing out the bones (7, 8, 9) in their longitudinal direction.

2. A device according to Claim 1,
**characterised in that** the retention device comprises a stripping die device for pressing through the centre joint (3) and for stripping off the meat and/or the skin situated in the region of the centre joint (3).

3. A device according to one of Claims 1 to 2,
**characterised in that** the first (2) and/or second (4) cutting device comprises a saw.

4. A device according to one of Claims 1 to 3,
**characterised in that** the ejection device comprises a first (10) and a second (11) pressure plate substantially parallel to one another, which can be moved towards one another with the interposition of the limbs (1),
**in that** the first pressure plate (10) is provided with at least one recess (15, 16, 17) for pushing through the bones (7, 8, 9),
**and in that** the second pressure plate (11) has means (12, 13, 14) for ejecting the bones (7, 8, 9).

5. A device according to Claim 4,
**characterised in that** the ejection means (12, 13, 14) comprise at least one recess, which with respect to its position is associated with the position of the bone (7, 8, 9), and also a ram (12, 13, 14) which can be passed through the recess.

6. A device according to Claim 4 or 5,
**characterised in that** at least one of the pressure plates (10, 11) is constructed divided in the manner of clamp forceps and is provided with recesses (15, 16, 17) for gripping around the bones (7, 8, 9).

7. A device according to one of Claims 1 to 6,
**characterised in that** the first (2) and the second (4) cutting devices are constructed so that the joints (3, 5) are separated with the separation of the tendons.

8. A method for boning limbs, using the device according to one of Claims 1 to 7, with the following process steps:
- retention of the limbs (1) to be boned when the centre joint (3) is bent with substantially parallel alignment of the bones (7, 8, 9),
- separation of the centre joint (3) including the tendons attached thereto ,
- separation of the end joint region (5) and/or of the end region of the limbs (1) including the tendons attached thereto,
- clamping of the limbs (1) between a first (10) and a second (11) pressure plate,
- pressing the meat of the limbs (1) between the pressure plates (10, 11) and partial pushing out of the at least one bone (7, 8, 9) by the pressure plate, and
- ejection of the at least one bone (7, 8, 9) in its longitudinal direction by means of a ram (12, 13, 14) (Fig. 17).

9. A method according to Claim 8,
**characterised in that** before separating the centre joint region (3) and/or the end joint (5) the meat located there with the associated skin is stripped off in the direction of the limbs (1).

10. A method according to one of Claims 8 and 9,
**characterised in that** after the separation of the centre joint region (3) the limbs (1) are boned separately with respect to the two resultant individual parts.

## Revendications

1. Dispositif de désossement des membres (1) de volailles ou autres volatiles, en particulier pour le désossement des ailes et cuisses, comprenant
- un dispositif de serrage destiné à bloquer les membres (1), dont une articulation centrale (3) est coudée et dont les os (7, 8, 9) sont sensiblement parallèles les uns aux autres,
- un premier dispositif de coupe (2) destiné à trancher l'articulation centrale (3) des membres (1),
- un deuxième dispositif de coupe (4) destiné à trancher les articulations finales (5) et/ou les extrémités (6) des membres, et
- un dispositif d'extraction, destiné à extraire les os (7, 8, 9) dans leur sens longitudinal.

2. Dispositif de désossement selon la revendication 1, caractérisé en ce que le dispositif de serrage comprend une matrice de dépouillage, destinée à retirer de force l'articulation centrale (3) et à enlever la viande et/ou la peau qui se trouve au niveau de l'articulation centrale (3).

3. Dispositif de désossement selon l'une des revendications 1 à 2, caractérisé en ce que le premier (2) et/ou le deuxième (4) dispositif de coupe sont formés par une scie.

4. Dispositif de désossement selon l'une des revendications 1 à 3, caractérisé en ce que le dispositif d'extraction comprend une première (10) et une deuxième (11) plaque de compression, sensiblement parallèles l'une à l'autre, susceptibles d'être déplacées l'une contre l'autre lorsque les membres (1) sont posés entre elles, en ce que la première plaque de compression (10) est munie d'au moins un évidement (15, 16, 17), dans lequel s'engagent les os (7, 8, 9), et en ce que la deuxième plaque de compression (11) est munie d'organes d'extraction (12, 13, 14), destinés à extraire les os (7, 8, 9).

5. Dispositif de désossement selon la revendication 4, caractérisé en ce que les organes d'extraction (12, 13, 14) comprennent au moins un évidement, dont la position coïncide avec la position de l'os (7, 8, 9), ainsi qu'un poussoir (12, 13, 14), qui peut être guidé à travers l'évidement.

6. Dispositif de désossement selon l'une des revendications 4 ou 5, caractérisé en ce qu'au moins l'une des deux plaques de compression (10, 11) est divisée en deux parties pour former une pince étau et est munie d'évidements (15, 16, 17), destinés à enserrer les os (7, 8, 9).

7. Dispositif de désossement selon l'une des revendications 1 à 6, caractérisé en ce que le premier (2) et le deuxième (4) dispositif de coupe sont conçus de telle sorte que les articulations (3, 5) sont tranchées en même temps que les tendons.

8. Procédé de désossement des membres, dans lequel on utilise le dispositif conçu selon l'une des revendications 1 à 7, comprenant les étapes suivantes :
- serrage des membres (1) à désosser, présentant une articulation centrale (3) coudée et des os (7, 8, 9) sensiblement parallèles les uns aux autres,
- tranchage de l'articulation centrale (3), y compris les tendons qui y sont attachés,
- tranchage de l'articulation finale (5) et/ou de l'extrémité (6) des membres (1), y compris des tendons qui y sont attachés,
- blocage des membres (1) entre une première (10) et une deuxième (11) plaque de compression,
- compression de la viande des membres (1) entre les plaques de compression (10, 11) et poussée partielle exercée sur au moins un os (7, 8, 9) à travers la plaque de compression, et
- extraction d'au moins un os (7, 8, 9) dans son sens longitudinal à l'aide d'un poussoir (12, 13, 14). (Figure 17).

9. Procédé de désossement selon la revendication 8, caractérisé en ce que, avant le tranchage de l'articulation centrale (3) et/ou de l'articulation finale (5), la viande, située au niveau desdites articulations, ainsi que sa peau sont enlevées en tirant dans le sens des membres (1).

10. Procédé selon les revendications 8 et 9, caractérisé en ce que, après le tranchage de l'articulation centrale (3), les deux morceaux de membres (1), qui résultent de cette opération, sont désossés chacun séparément.
